# EUROPÄISCHE PATENTSCHRIFT

(11) **EP 3 530 393 B1**
(45) Veröffentlichungstag und Bekanntmachung des Hinweises auf die Patenterteilung: **04.05.2022**
(21) Anmeldenummer: 19156192.7
(22) Anmeldetag: 08.02.2019
(51) Int. Cl.: B23D 61/12

(54) **SÄGEBLATT MIT SCHUB- UND ZUGVERZAHNUNG**
SAW BLADE WITH PUSH AND PULL TOOTHING
LAME DE SCIE POURVUE DE DENTURE DE POUSSÉE ET DE TRACTION

(30) Priorität: 26.02.2018 DE 102018104249
(43) Veröffentlichungstag der Anmeldung: 28.08.2019
(73) Patentinhaber: MPS Sägen GmbH, 54332 Wasserliesch (DE)
(72) Erfinder: BARTHULI, Alexander, 54338 Schweich (DE)
(74) Vertreter: Grundmann, Dirk

(56) Entgegenhaltungen:
- WO-A1-2018/153530
- WO-A2-2008/106425
- DE-A1- 3 706 429
- DE-A1-102007 039 240
- GB-A- 2 177 344
- US-A- 481 321

## Beschreibung

### Gebiet der Technik

Die Erfindung betrifft ein Sägeblatt mit jeweils eine zu einem ersten Ende weisende, in einem ersten Winkel zu einer zur Erstreckungsrichtung des Sägeblattes senkrechten Linie geneigten ersten Zahnflanke und eine zu einem zweiten Ende weisende, in einem zweiten Winkel zur senkrechten Linie geneigten zweiten Zahnflanke aufweisenden Zähnen, die in einer dem ersten Ende benachbarten Stoßverzahnung, in der die ersten Winkel größer sind als die zweiten Winkel, und die in einer dem zweiten Ende benachbarten Zugverzahnung angeordnet sind, in der die ersten Winkel kleiner sind als die zweiten Winkel.

### Stand der Technik

Derartige Sägeblätter sind im Stand der Technik bekannt und werden als Stichsägeblätter verwendet, um Küchenarbeitsplatten zu sägen. An die Angel des Sägeblattes grenzt eine Stoßverzahnung an. An die Spitze des Sägeblattes grenzt eine Zugverzahnung an, so dass die Zerspanrichtung immer ins Werkstück hinein erfolgt. Sägeblätter mit in zwei verschiedenen Richtungen verzahnten Sägezähnen sind bekannt aus den US 2003/0 010 179 A1, WO 2008/ 106 425 A2 und DE 37 06 429 A1. Die GB 2177 344 A1 beschreibt ein Sägeblatt gemäß dem Oberbegriff des Anspruchs 1, mit einer Zugverzahnung und einer Stoßverzahnung, bei der die Zähne der Zugverzahnung bzw. der Stoßverzahnung graduell sich ändernde Zahnflankenwinkel aufweisen. Die WO 2018/153530 A1 beschreibt ein Sägeblatt mit Stoßverzahnung und Zugverzahnung, wobei die Zähne der Zugverzahnung und die Zähne der Stoßverzahnung untereinander gleichgestaltet sind. Eine ähnliche Verzahnung beschreibt die DE 10 2007 039 240 A1. Aus der US 481 321 ist eine Verzahnung bekannt, bei der mehrere Gruppen von Zähnen hintereinander angeordnet sind, wobei die Gruppen von Zähnen Zahnflanken besitzen, die sich in einem Punkt schneiden.

### Zusammenfassung der Erfindung

Der Erfindung liegt die Aufgabe zugrunde, das gattungsgemäße Sägeblatt hinsichtlich seines Schneiderfolges gebrauchsvorteilhaft zu verbessern, wobei insbesondere die Aufgabe besteht, einen Schnitt mit einer glatten Schnittkante zu erzeugen.

Zunächst und im Wesentlichen wird ein Sägeblatt mit bevorzugt geschliffenen Zähnen vorgeschlagen, bei dem an einem ersten Ende, insbesondere dem Ende, das mit einer Angel versehen ist, eine Stoßverzahnung angeordnet ist. Bei einem derartig ausgebildeten Sägeblatt, insbesondere Stichsägeblatt besitzen die Zähne eine in Stoßrichtung weisende Zahnflanke, die bezogen auf eine Bezugslinie, die senkrecht zur Erstreckungsrichtung des Sägeblattes verläuft, spitzwinkliger geneigt ist, als eine davon wegweisende zweite Zahnflanke. Die angrenzend an das gegenüberliegende Ende, beispielsweise der Spitze des Sägeblattes, angeordnete Zugverzahnung weist eine dazu spiegelbildliche Verzahnung auf. Die in Zugrichtung weisenden Schneidflanken sind spitzwinkliger zu einer senkrecht zur Erstreckungsrichtung verlaufenden Bezugslinie geneigt, als die zur Spitze weisenden Zahnflanken. Erfindungsgemäß befindet sich zwischen der Stoßverzahnung und der Zugverzahnung eine Neutralverzahnung. In dieser Neutralverzahnung sind zumindest einige Zähne angeordnet, deren in Stoßrichtung weisende Zahnflanken einen größeren Neigungswinkel aufweisen, als die Zähne der Stoßverzahnung und deren in Zugrichtung weisende Zahnflanken einen größeren Neigungswinkel aufweisen, als die in Zugrichtung weisenden Zahnflanken der Zähne der Zugverzahnung. In einer Weiterbildung der Erfindung wird vorgeschlagen, dass sich die ersten Winkel der Zähne vom ersten Ende hin zum zweiten Ende schrittweise verkleinern. Alternativ oder ergänzend dazu können sich die zweiten Winkel der Zähne vom ersten Ende zum zweiten Ende schrittweise vergrößern. Dies hat zur Folge, dass die den jeweiligen Enden unmittelbar benachbarten Zähne Schneidkanten mit der geringsten Neigung zu einer Senkrechten zur Erstreckungsrichtung aufweisen und damit die größte Schneidleistung erbringen. Die geringste Schneidleistung wird von den Zähnen der Neutralzone erbracht. Diese haben im Wesentlichen die Funktion von Räumzähnen. Dort können auch ein oder mehrere Zähne angeordnet sein, bei denen die ersten und zweiten Zahnflanken denselben Winkel zu einer senkrecht zur Erstreckungsrichtung verlaufenden Bezugslinie aufweisen. Die ersten Zahnflanken der zwischen dem ersten Ende und dem zweiten Ende angeordneten Zähne haben somit in Richtung zum zweiten Ende einen abnehmenden ersten Winkel. Die zweiten Zahnflanken der zwischen dem ersten Ende und dem zweiten Ende angeordneten Zähne haben in Richtung zum zweiten Ende einen zunehmenden zweiten Winkel. In einer Weiterbildung der Erfindung ist vorgesehen, dass die ersten Winkel beziehungsweise die zweiten Winkel der ersten beziehungsweise zweiten Zahnflanke benachbarter Zähne voneinander verschieden sind. Erfindungsgemäß sind die ersten und zweiten Zahnflanken derart geneigt, dass eine Winkelhalbierende zwischen der ersten Zahnflanke und der zweiten Zahnflanke zumindest einiger der Zähne sich in einem Punkt oder in einer einen Punkt umgebenden Kreisfläche schneiden. Erfindungsgemäß schneiden sich die Winkelhalbierenden aller Zähne in einem Punkt beziehungsweise einer einen Punkt umgebenden Fläche, wobei der Durchmesser einer derartigen Kreisfläche maximal einem Viertel der Länge der Gesamtverzahnung entspricht, wobei als Länge der Gesamtverzahnung die Strecke zwischen dem, dem ersten Ende am nächsten liegenden Zahn zu dem, dem zweiten Ende am nächsten liegenden Zahn verstanden wird. Die Fläche, in der sich gemäß einem Ausführungsbeispiel der Erfindung die Winkelhalbierenden aller Zähne schneiden, kann eine Kreisfläche mit maximal einem Achtel der Länge der Gesamtverzahnung sein. Bei den Zähnen handelt es sich bevorzugt um geschliffene Zähne. Bevorzugt kann jede Zahnflanke eines Zahnes eine Schneidkante ausbilden, wobei die Schneidkanten an Phasen angrenzen und die an die beiden Schneidkanten eines Zahnes angrenzenden Phasen im Zahnspitzenbereich dachartig zueinander stehen, sodass sich eine in Richtung der Winkelhalbierenden weisenden Begrenzungslinie zwischen den beiden Phasen ausbildet. In einer bevorzugten Weiterbildung der Erfindung wird vorgeschlagen, dass die Spitzen der Zähne auf einer Bogenlinie verlaufen. Es kann sich bevorzugt um eine konkave Bogenlinie handeln, die eine Einschnürung in das Sägeblatt formt. Die Bogenlinie kann eine Kreisbogenlinie sein. Der Radius der Kreisbogenlinie ist größer als die Gesamtlänge der Verzahnung. Der Mittelpunkt der Bogenlinie liegt bevorzugt auf der die Verzahnung aufweisenden Seite des Sägeblattes. Unter dem Schnittpunkt der Winkelhalbierenden wird eine Fläche verstanden, innerhalb der die Gesamtzahl der Schnittpunkte der Winkelhalbierenden aller Zähne der Verzahnung liegt. Der Schnittpunkt wird gewissermaßen von dem Mittelpunkt eines Kreises gebildet, in dem sich alle Winkelhalbierenden schneiden. Der Schnittpunkt hat einen Abstand zur Verzahnung, der kleiner ist, als der Radius der Bogenlinie. Die Kreisfläche um den Schnittpunkt, in dem sich die Winkelhalbierenden schneiden, hat einen Durchmesser von maximal der Hälfte, bevorzugt maximal einem Viertel der Gesamtlänge der Verzahnung. Zieht man durch den Mittelpunkt der Bogenlinie eine Senkrechte zur Erstreckungsrichtung des Sägeblattes, so schneidet diese Senkrechte das Sägeblatt etwa mittig der Verzahnung. Zieht man eine Senkrechte zur Erstreckungsrichtung des Sägeblattes durch den Schnittpunkt der Winkelhalbierenden, so schneidet diese Senkrechte das Sägeblatt an einer Position, die aus der Mitte versetzt ist. Bevorzugt ist der Schnittpunkt von der Mitte zum ersten Ende hin versetzt. Das zweite Ende des Sägeblattes wird bevorzugt von der Spitze eines Stichsägeblattes gebildet, dessen erstes Ende eine Angel ist, mit der das Stichsägeblatt in einem Antriebsgerät befestigt werden kann.

### Kurze Beschreibung der Zeichnungen

Ein Ausführungsbeispiel der Erfindung wird nachfolgend anhand beigefügter Zeichnungen erläutert. Es zeigen:

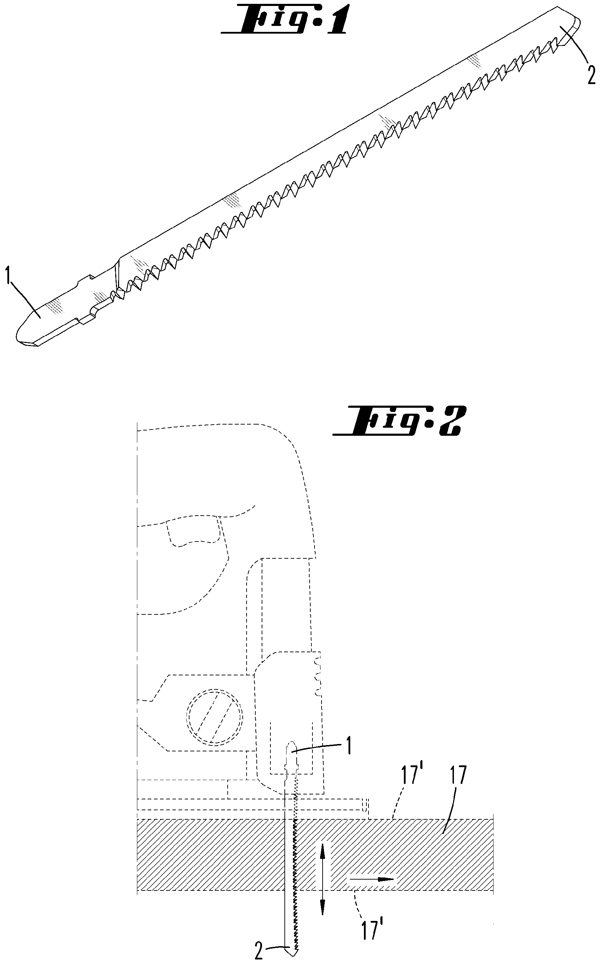

- Fig. 1: eine perspektivische Darstellung des Sägeblattes,
- Fig. 2: eine Funktionsstellung des Sägeblattes,

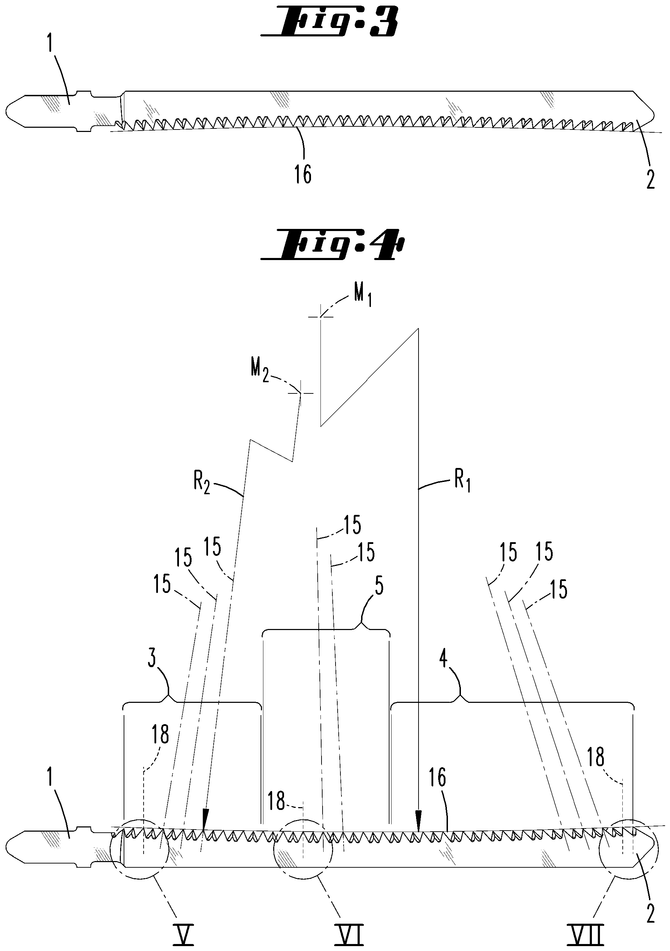

- Fig. 3: eine Draufsicht auf das Sägeblatt,
- Fig. 4: eine spiegelbildliche Darstellung gemäß Figur 3 zur Verdeutlichung der Lagen der Stoßverzahnung 3, Zugverzahnung 4 und Neutralverzahnung 5,

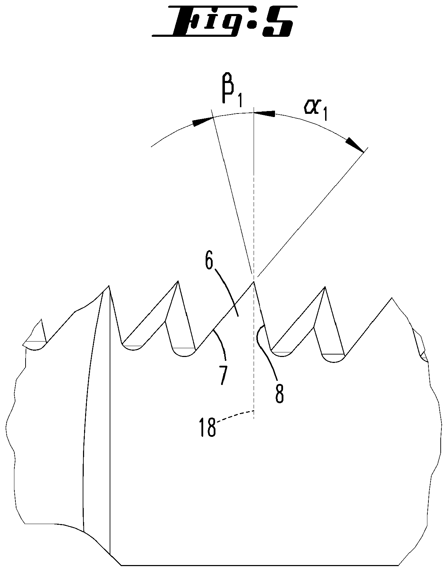

- Fig. 5: den Ausschnitt V in Figur 4 im Bereich der Stoßverzahnung 3,

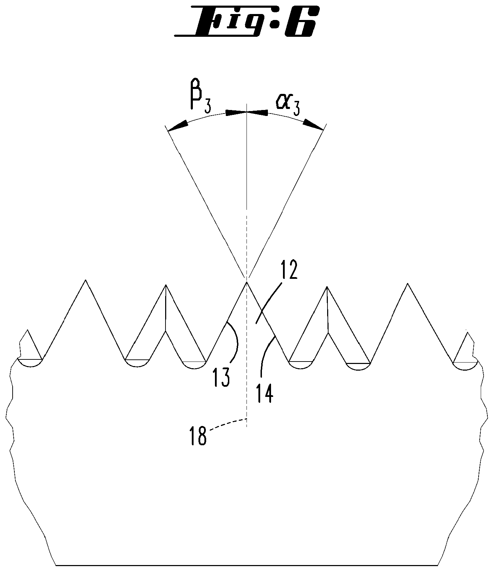

- Fig. 6: den Ausschnitt VI in Figur 4 im Bereich der Neutralverzahnung 5 und

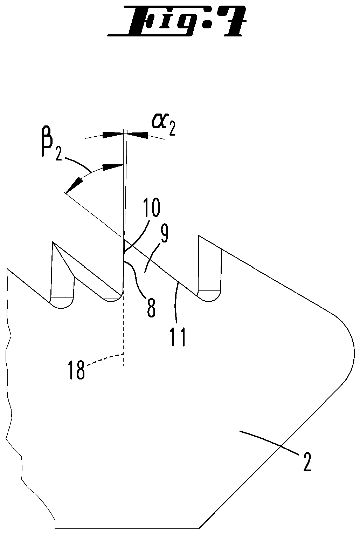

- Fig. 7: den Ausschnitt VII in Figur 4 im Bereich der Zugverzahnung 4,

### Beschreibung der Ausführungsformen

Aus dem Stand der Technik sind Stichsägeblätter bekannt, die auf ihrer Brust eine Verzahnung aufweisen. Die Verzahnung erstreckt sich von einem ersten Ende 1, nämlich einer Angel, bis zu einem zweiten Ende 2, nämlich einer Spitze. Die Verzahnung besteht aus einer an die Angel angrenzenden Stoßverzahnung und einer an die Spitze angrenzenden Zugverzahnung. Die Zähne der Verzahnung besitzen zwei Zahnflanken. Eine erste Zahnflanke ist zum erstens Ende gerichtet. Eine zweite Zahnflanke ist zum zweiten Ende gerichtet. Unter Erstreckungsrichtung des Sägeblattes wird erfindungsgemäß eine gedachte Linie verstanden, die sich entlang der Verzahnung, also vom ersten Ende zum zweiten Ende erstreckt. Zur Charakterisierung der Zähne der Verzahnung werden Winkel verwendet, die die Zahnflanken zu einer Bezugslinie 18 einnehmen, wobei die Bezugslinie 18 eine senkrechte Linie zur Erstreckungsrichtung ist. fixe Zahnwinkel, die jedoch in etwa klappsymmetrisch zu denen der Stoßverzahnung 3 ausgerichtet sind. Jeder Zahn der Stoßverzahnung 3 und jeder Zahn der Zugverzahnung 4 hat somit jeweils den gleichen Zahn- und Spanwinkel.

In der Stoßverzahnung 3 ist der erste Winkel a, den die erste Zahnflanke 7 zur Bezugslinie 18 einnimmt, größer, als der zweite Winkel β, den die zweite Zahnflanke 8 zur Bezugslinie 18 einnimmt, so dass die von der Angel wegweisende zweite Zahnflanke 8 hier die spanabhebende Schneidkante ist. Im Bereich der dem zweiten Ende 2 benachbarten Zugverzahnung 4 ist der erste Winkel α der ersten Zahnflanke 10 kleiner als der zweite Winkel β der Zahnflanke 11, so dass hier die zerspanende Schneidkante von dem zweiten Ende 2 weggerichtet ist. Beim Stand der Technik sind Zugverzahnung 4 und Stoßverzahnung 3 - bezogen auf eine Symmetrielinie, klappsymmetrisch angeordnet. Dort hat jeder Zahn der Stoßverzahnung 3 und jeder Zahn der Zugverzahnung 4 jeweils den gleichen Zahnwinkel beziehungsweise Spanwinkel.

Erfindungsgemäß weist die Stoßverzahnung 3 und die Zugverzahnung 4 eine vom Stand der Technik abweichende Zahnfolgen-Gestaltung auf. Es wird mit einem Spitzzahn gearbeitet, der keine fixe Ausrichtung seiner Zahnflanken besitzt.

Bei der Verzahnung handelt es sich um eine geschliffene Verzahnung, die drei Unterverzahnungen aufweist. In einer an die Angel angrenzenden Stoßverzahnung 3 sind Stoßzähne 6 angeordnet, die eine erste Zahnflanke 7 aufweisen, die zu dem von der Angel gebildeten ersten Ende weisen. Die ersten Zahnflanken 7 haben einen ersten Neigungswinkel α1 zu einer senkrecht zur Erstreckungslinie verlaufenden Bezugslinie 18. Eine zweite Zahnflanke 8, die sich in einer Zahnspitze 6' mit der ersten Zahnflanke 7 trifft, hat einen zweiten Neigungswinkel β1 zur Bezugslinie 18, wobei der erste Neigungswinkel α1 größer ist, als der zweite Neigungswinkel β1. Der zweite Neigungswinkel β1 beträgt hier etwa 14 Grad.

In einer dem zweiten Ende 2 benachbarten Zugverzahnung 4 sind Zugzähne 9 angeordnet, deren erste Zahnflanke 10 einen Neigungswinkel a2 zur Bezugslinie 18 aufweist, der kleiner ist, als der Neigungswinkel β2 einer zweiten Zahnflanke 11, die zum zweiten Ende 2 hin weist, welche von einer Spitze des Stichsägeblattes gebildet ist. Der erste Neigungswinkel a2 der zum ersten Ende 1 hin weisenden ersten Zahnflanke 10 beträgt hier etwa 1 Grad.

Zwischen der Stoßverzahnung 3 und der Zugverzahnung 4 befindet sich etwa in der Mitte der Gesamtverzahnung eine Neutralverzahnung 5, bei der sich die in einer Zahnspitze 12' schneidenden ersten Zahnflanken 13 einen ersten Neigungswinkel a3 zu einer Senkrechten 8 zur Erstreckungsrichtung besitzen, der kleiner ist, als der erste Neigungswinkel α1 in der Stoßverzahnung 3 und größer ist, als der erste Neigungswinkel a2 in der Zugverzahnung 4. Der zweite Neigungswinkel β3 der zweiten Zahnflanke 14, die zur Spitze 2 weist, ist größer als der zweite Neigungswinkel β1 der ersten Zahnflanken in der Stoßverzahnung 3 und kleiner als der zweite Neigungswinkel β2 der zweiten Zahnflanken 11 in der Zugverzahnung 4.

Beim Ausführungsbeispiel sind die Neigungswinkel α, β zweier benachbarter Zähne voneinander verschieden. Beginnend mit den dem ersten Ende 1 benachbarten Zähnen 6 vergrößert sich der zweite Neigungswinkel β bei jedem in Richtung auf das zweite Ende 2 folgenden Zahn, bis der Neigungswinkel β an dem dem zweiten Ende 2 unmittelbar benachbarten Zahn 9 sein Maximum erreicht. Der erste Neigungswinkel α hat hingegen bei dem dem ersten Ende 1 unmittelbar benachbarten Zahn 6 sein Maximum und verkleinert sich schrittweise von Folgezahn zu Folgezahn bis zu dem dem zweiten Ende 2 unmittelbar benachbarten Zahn 9, wo der erste Neigungswinkel a2 sein Minimum besitzt. Die Gesamtverzahnung besitzt somit aufeinanderfolgende Zähne, bei denen sich der Winkel der Zahnflanken zu einer Bezugslinie schrittweise gleichsinnig von Zahn zu Zahn verändert.

Zieht man durch die Spitzen 6', 9', 12' der Zähne 6, 9,12 jeweils eine Winkelhalbierende 15 zu den jeweils ersten und zweiten Zahnflanken 7, 8; 10, 11; 13, 14, so schneiden sich die Winkelhalbierenden 15 innerhalb einer kleinen Fläche, beispielsweise einer Kreisfläche. Der Mittelpunkt M2 dieser Fläche kann als Schnittpunkt der Winkelhalbierenden 15 betrachtet werden. Der Abstand R2 dieses Mittelpunktes M2 von den Zahnspitzen 6', 9', 12' beträgt etwa 170 mm.

Eine senkrecht zur Erstreckungsrichtung des Sägeblattes verlaufende Hilfslinie, die durch diesen Schnittpunkt hindurchgeht, schneidet die Verzahnung außermittig. Der Schnittpunkt dieser Hilfslinie liegt von der Mitte der Verzahnung hin zum ersten Ende (der Angel) versetzt.

Die Zahnspitzen 6', 9', 12' liegen auf einer Bogenlinie 16. Der Mittelpunkt M1 dieser Bogenlinie 16 liegt auf derselben Seite des Sägeblattes, auf dem auch der Schnittpunkt der Winkelhalbierenden 15 liegt. Er ist aber weiter von dem Sägeblatt beabstandet, als der Schnittpunkt, nämlich etwa 1.300 mm (Radius R1).

In Bezug auf den geradlinig verlaufenden Blattrücken definiert die Bogenlinie 16 somit eine Einschnürung. Hierdurch wird vermieden, dass bei dünneren Werkstücken 17 die in die Oberseite 17' eintauchende Stoßverzahnung eine spanabhebende Wirkung im Bereich der Unterseite 17" besitzt beziehungsweise die in die Unterseite 17 eintauchende Zugverzahnung eine spanabhebende Wirkung an der Oberseite 17' besitzt.

Zufolge der variierenden Zahnform wird mit dem erfindungsgemäßen Sägeblatt ein extrem sauberer Schnitt auf beiden Seiten eines Werkstücks erreicht, da Ausrisse vermieden werden.

Zur Fertigung derartiger Sägeblätter wird bevorzugt eine Fünfachs-Fräsanlage vorgesehen, mit der die Zahnflanken 7, 8, 10, 11, 13, 14 in variierender Anordnung gefertigt werden.

Die vorstehenden Ausführungen dienen der Erläuterung der von der Anmeldung insgesamt erfassten Erfindungen, die den Stand der Technik zumindest durch die folgenden Merkmalskombinationen jeweils auch eigenständig weiterbilden, wobei zwei, mehrere oder alle dieser Merkmalskombinationen auch kombiniert sein können.

**Liste der Bezugszeichen**

| | | | |
|---|---|---|---|
| 1 | erstes Ende | α1 | erster Winkel |
| 2 | zweites Ende | a2 | erster Winkel |
| 3 | Stoßverzahnung | a3 | erster Winkel |
| 4 | Zugverzahnung | β1 | zweiter Winkel |
| 5 | Neutralverzahnung | β2 | zweiter Winkel |
| 6 | Zahn | β3 | zweiter Winkel |
| 6' | Spitze | | |
| 7 | erste Zahnflanke | | |
| 8 | zweite Zahnflanke | M1 | Mittelpunkt |
| 9 | Zahn | M2 | Mittelpunkt |
| 9' | Spitze | R1 | Radius |
| 10 | erste Zahnflanke | R2 | Abstand |
| 11 | zweite Zahnflanke | | |
| 12 | Zahn | | |
| 12' | Spitze | | |
| 13 | erste Zahnflanke | | |
| 14 | zweite Zahnflanke | | |
| 15 | Winkelhalbierende | | |
| 16 | Bogenlinie | | |
| 17 | Werkstück | | |
| 17' | Oberseite | | |
| 17" | Unterseite | | |
| 18 | Bezugslinie | | |

## Patentansprüche

1. Sägeblatt mit jeweils eine zu einem ersten Ende (1) weisende, in einem ersten Winkel (α1, α2, α3) zu einer zur Erstreckungsrichtung des Sägeblattes senkrechten Linie (18) geneigten ersten Zahnflanke (7, 10, 13) und eine zu einem zweiten Ende (2) weisende, in einem zweiten Winkel (β1, β2, β3) zur senkrechten Linie (18) geneigten zweiten Zahnflanke (8, 11, 14) aufweisenden Zähnen (6, 9, 12), die in einer dem ersten Ende (1) benachbarten Stoßverzahnung (3), in der die ersten Winkel (α1) größer sind als die zweiten Winkel (β1), und die in einer dem zweiten Ende (2) benachbarten Zugverzahnung (4) angeordnet sind, in der die ersten Winkel (α2) kleiner sind als die zweiten Winkel (β2), dass Zähne (12), die in einer zwischen der Stoßverzahnung (3) und der Zugverzahnung (4) liegenden Neutralverzahnung (5) angeordnet sind, jeweils eine erste Zahnflanke (13) aufweisen mit einem ersten Winkel (α3) zur senkrechten Linie (18), der kleiner ist als die ersten Winkel (α1) der Stoßverzahnung (3) und größer ist als die ersten Winkel (α2) der Zugverzahnung, und eine zweite Zahnflanke (14) aufweisen mit einem zweiten Winkel (β3) zur senkrechten Linie (18), der größer ist als die zweiten Winkel (β1) der Stoßverzahnung (3) und kleiner ist, als die zweiten Winkel (β2) der Zugverzahnung (4), **dadurch gekennzeichnet, dass** die Winkelhalbierenden (15) jeweils zwischen erster Zahnflanke (7, 10, 13) und zweiter Zahnflanke (8, 11, 14) aller Zähne sich in einem Punkt oder einer einen Punkt umgebenden Kreisfläche schneiden, wobei der Durchmesser der Kreisfläche nicht größer ist als ein Viertel der Länge der Gesamtverzahnung.

2. Sägeblatt nach Anspruch 1, **dadurch gekennzeichnet, dass** die Spitzen (6', 9', 12') der Zähne (6, 9, 12) auf einer konkav verlaufenden Kreisbogenlinie (16) liegen, deren Radius (R1) größer ist als die Gesamtlänge der Verzahnung.

3. Sägeblatt nach Anspruch 2, **dadurch gekennzeichnet, dass** der Schnittpunkt der Winkelhalbierenden (15) oder der Mittelpunkt der Kreisfläche einen Abstand (R2) zur Verzahnung besitzt, der kleiner ist, als der Radius (R1) der Bogenlinie (16).

4. Sägeblatt nach einem der vorhergehenden Ansprüche, **dadurch gekennzeichnet, dass** die ersten Zahnflanken (7, 10, 13) der zwischen dem ersten Ende (1) und dem zweiten Ende (2) angeordneten Zähne (6, 9, 12) in Richtung zum zweiten Ende (2) schrittweise abnehmende erste Winkel (α1, α2, α3) aufweisen.

5. Sägeblatt nach einem der vorhergehenden Ansprüche, **dadurch gekennzeichnet, dass** die zweiten Zahnflanken (8, 11, 14) der zwischen dem ersten Ende (1) und dem zweiten Ende (2) angeordneten Zähne (6, 9, 12) in Richtung zum zweiten Ende (2) schrittweise größer werdende zweite Winkel (β1, β2, β3) aufweisen.

6. Sägeblatt nach einem der vorhergehenden Ansprüche, **dadurch gekennzeichnet, dass** die ersten Winkel (α1, α2, α3) der ersten Zahnflanken (7, 10, 13) zur senkrechen Linie (18) benachbarter Zähne voneinander verschieden sind.

7. Sägeblatt nach einem der vorhergehenden Ansprüche, **dadurch gekennzeichnet, dass** die zweiten Winkel (β1, β2, β3) der zweiten Zahnflanken (8, 11, 14) benachbarter Zähne (6, 9, 12) voneinander verschieden sind.

8. Sägeblatt nach einem der vorhergehenden Ansprüche soweit abhängig nach Anspruch 2, **dadurch gekennzeichnet, dass** eine senkrecht zur Erstreckungsrichtung durch den Mittelpunkt (M1) der Bogenlinie (16) gezogene Linie etwa mittig zwischen den Enden der Gesamtverzahnung liegt.

9. Sägeblatt nach einem der vorhergehenden Ansprüche, **dadurch gekennzeichnet, dass** der Schnittpunkt der Winkelhalbierenden (15) oder der Mittelpunkt (M2) einer Schnittfläche zum ersten oder zweiten Ende hin versetzt außermittig der Gesamtverzahnung liegt.

## Claims

1. Saw blade comprising teeth (6, 9, 12) which each have a first tooth flank (7, 10, 13) which faces a first end (1) and is inclined at a first angle (a1, a2, a3) with respect to a line (18) perpendicular to the extension direction of the saw blade, and a second tooth flank (8, 11, 14) which faces a second end (2) and is inclined at a second angle (β1, β2, β3) with respect to the perpendicular line (18), which teeth are arranged in a push toothing (3) adjacent to the first end (1), in which the first angles (a1) are greater than the second angles (β1), and in a pull toothing (4) adjacent to the second end (2), in which the first angles (a2) are smaller than the second angles (β2), that teeth (12) which are arranged in a neutral toothing (5) between the push toothing (3) and the pull toothing (4) each have a first tooth flank (13) having a first angle (a3) with respect to the perpendicular line (18) that is smaller than the first angle (a1) of the push toothing (3) and greater than the first angle (a2) of the pull toothing, and have a second tooth flank (14) having a second angle (β3) with respect to the perpendicular line (18) that is greater than the second angle (β1) of the push toothing (3) and smaller than the second angle (β2) of the pull toothing (4), **characterised in that** the angle bisectors (15) between the first tooth flank (7, 10, 13) and second tooth flank (8, 11, 14) of all of the teeth in each case intersect at a point or a circular area surrounding a point, the diameter of the circular area not being greater than a quarter of the length of the entire toothing.

2. Saw blade according to claim 1, **characterised in that** the tips (6', 9', 12') of the teeth (6, 9, 12) lie on a concave circular arc line (16), the radius (R1) of which is greater than the total length of the toothing.

3. Saw blade according to claim 2, **characterised in that** the point of intersection of the angle bisector (15) or the centre of the circular area is at a distance (R2) from the toothing that is smaller than the radius (R1) of the curved line (16).

4. Saw blade according to any of the preceding claims, **characterised in that** the first tooth flanks (7, 10, 13) of the teeth (6, 9, 12) arranged between the first end (1) and the second end (2) have first angles (a1, a2, a3) which gradually decrease in the direction of the second end (2).

5. Saw blade according to any of the preceding claims, **characterised in that** the second tooth flanks (8, 11, 14) of the teeth (6, 9, 12) arranged between the first end (1) and the second end (2) have second angles (β1, β2, β3) which gradually increase in the direction of the second end (2).

6. Saw blade according to any of the preceding claims, **characterised in that** the first angles (a1, a2, a3) of the first tooth flanks (7, 10, 13) with respect to the perpendicular line (18) of adjacent teeth are different from one another.

7. Saw blade according to any of the preceding claims, **characterised in that** the second angles (β1, β2, β3) of the second tooth flanks (8, 11, 14) of adjacent teeth (6, 9, 12) are different from one another.

8. Saw blade according to any of the preceding claims in so far as dependent according to claim 2, **characterised in that** a line drawn perpendicularly to the extension direction through the centre point (M1) of the curved line (16) is located approximately centrally between the ends of the overall toothing.

9. Saw blade according to any of the preceding claims, **characterised in that** the point of intersection of the angle bisector (15) or the centre point (M2) of a cutting surface is eccentric with respect to the overall toothing, so as to be offset towards the first or second end.

## Revendications

1. Lame de scie comprenant des dents (6, 9, 12) présentant chacune un premier flanc de dent (7, 10, 13) orienté vers une première extrémité (1) et incliné selon un premier angle (α1, α2, α3) par rapport à une ligne (18) perpendiculaire à la direction d'extension de la lame de scie et un deuxième flanc de dent (8, 11, 14) orienté vers une deuxième extrémité (2) et incliné selon un deuxième angle (β1, β2, β3) par rapport à la ligne perpendiculaire (18), qui sont disposées dans une denture de poussée (3) voisine de la première extrémité (1) dans laquelle les premiers angles (α1) sont plus grands que les deuxièmes angles (β1), et qui sont disposées dans une denture de traction (4) voisine de la deuxième extrémité (2) dans laquelle les premiers angles (α2) sont plus petits que les deuxièmes angles (β2), en ce que des dents (12) qui sont disposées dans une denture neutre (5) située entre la denture de poussée (3) et la denture de traction (4) présentent chacune un premier flanc de dent (13) avec un premier angle (α3) par rapport à la ligne perpendiculaire (18) qui est plus petit que les premiers angles (α1) de la denture de poussée (3) et plus grand que les premiers angles (α2) de la denture de traction, et présentent un deuxième flanc de dent (14) avec un deuxième angle (β3) par rapport à la ligne perpendiculaire (18) qui est plus grand que les deuxièmes angles (β1) de la denture de poussée (3) et plus petit que les deuxièmes angles (β2) de la denture de traction (4), **caractérisé en ce que** les bissectrices des angles (15) respectivement entre le premier flanc de dent (7, 10, 13) et le deuxième flanc de dent (8, 11, 14) de toutes les dents se coupent en un point ou en une surface circulaire entourant un point, dans laquelle le diamètre de la surface circulaire n'est pas supérieur au quart de la longueur de la denture totale.

2. Lame de scie selon la revendication 1, **caractérisée en ce que** les pointes (6', 9', 12') des dents (6, 9, 12) se trouvent sur un arc de cercle concave (16), dont le rayon (R1) est supérieur à la longueur totale de la denture.

3. Lame de scie selon la revendication 2, **caractérisée en ce que** le point d'intersection des bissectrices (15) ou le point central de la surface circulaire a une distance (R2) à la denture qui est inférieure au rayon (R1) de la ligne d'arc (16) .

4. Lame de scie selon l'une des revendications précédentes, **caractérisée en ce que** les premiers flancs (7, 10, 13) des dents (6, 9, 12) disposées entre la première extrémité (1) et la deuxième extrémité (2) présentent des premiers angles (α1, α2, α3) qui diminuent progressivement en direction de la deuxième extrémité (2).

5. Lame de scie selon l'une des revendications précédentes, **caractérisée en ce que** les deuxièmes flancs (8, 11, 14) des dents (6, 9, 12) disposées entre la première extrémité (1) et la deuxième extrémité (2) présentent des deuxièmes angles (β1, β2, β3) qui augmentent progressivement en direction de la deuxième extrémité (2).

6. Lame de scie selon l'une des revendications précédentes, **caractérisée en ce que** les premiers angles (α1, α2, α3) des premiers flancs de dents (7, 10, 13) par rapport à la ligne perpendiculaire (18) de dents voisines sont différents les uns des autres.

7. Lame de scie selon l'une des revendications précédentes, **caractérisée en ce que** les deuxièmes angles (β1, β2, β3) des deuxièmes flancs (8, 11, 14) des dents voisines (6, 9, 12) sont différents les uns des autres.

8. Lame de scie selon l'une quelconque des revendications en fonction de la revendication 2, **caractérisée en ce qu'**une ligne tracée perpendiculairement à la direction d'extension passant par le point central (M1) de la ligne d'arc de cercle (16) se trouve approximativement au centre entre les extrémités de la denture globale.

9. Lame de scie selon l'une des revendications précédentes, **caractérisée en ce que** le point d'intersection des bissectrices (15) ou le point central (M2) d'une surface de coupe est décalé vers la première ou la deuxième extrémité excentrée de la denture globale.
